(19) Europäisches Patentamt
European Patent Office
Office européen des brevets

(11) Veröffentlichungsnummer: **0 377 448 A2**

(12) # EUROPÄISCHE PATENTANMELDUNG

(21) Anmeldenummer: **90100060.4**

(22) Anmeldetag: **03.01.90**

(51) Int. Cl.5: **C08F 222/04, C08F 216/14, C11D 3/37, //(C08F222/04, 216:14),(C08F216/16,222:04)**

(30) Priorität: **05.01.89 DE 3900207**

(43) Veröffentlichungstag der Anmeldung: **11.07.90 Patentblatt 90/28**

(84) Benannte Vertragsstaaten: **AT BE CH DE DK ES FR GB IT LI NL**

(71) Anmelder: **BASF Aktiengesellschaft**
**Carl-Bosch-Strasse 38**
**D-6700 Ludwigshafen(DE)**

(72) Erfinder: **Boeckh, Dieter, Dr.**
**Trifelsring 63**
**D-6703 Limburgerhof(DE)**
Erfinder: **Seelmann-Eggebert, Hans-Peter, Dr.**
**Friedrichstrasse 8**
**D-6905 Schriesheim(DE)**
Erfinder: **Hartmann, Heinrich, Dr.**
**Weinheimer Strasse 46**
**D-6703 Limburgerhof(DE)**
Erfinder: **Koeffer, Dieter, Dr.**
**Zinkgraefstrasse 1**
**D-6940 Weinheim(DE)**
Erfinder: **Trieselt, Wolfgang, Dr.**
**Alwin-Mittasch-Platz 1**
**D-6700 Ludwigshafen(DE)**
Erfinder: **Kud, Alexander, Dr.**
**Am Hellbrunn 57**
**D-6509 Eppelsheim(DE)**
Erfinder: **Baur, Richard, Dr.**
**Nelkenstrasse 1**
**D-6704 Mutterstadt(DE)**

(54) **Verwendung von Copolymerisaten aus 1,2-Di-alkoxyethylenen und monoethylenisch ungesättigten Dicarbonsäureanhydriden in Waschmitteln und Waschmittel, die diese Copolymerisate enthalten.**

(57) Verwendung von Copolymerisaten, die erhältlich sind durch Copolymerisieren von

(a) 10 bis 55 Mol% 1,2-Di-$C_1$- bis $C_4$-alkoxyethylenen,

(b) 10 bis 60 Mol% monoethylenisch ungesättigten Dicarbonsäureanhydriden mit 4 bis 8C-Atomen,

(c) 0 bis 60 Mol% monoethylenisch ungesättigten $C_3$- bis $C_8$-Monocarbonsäuren und

(d) 0 bis 20 Mol% anderen monoethylenisch ungesättigten Monomeren und anschließende Hydrolyse der Anhydridgruppen der einpolymerisierten Monomeren (b) oder Umsetzung dieser Gruppen mit Alkoholen oder Aminen als Zusatz zu pulverförmigen und flüssigen Waschmitteln in Mengen von 0,1 bis 15 Gew.% und Waschmittel, die diese Copolymerisate enthalten.

EP 0 377 448 A2

# Verwendung von Copolymerisaten aus 1,2-Di-alkoxyethylenen und monoethylenisch ungesättigten Dicarbonsäureanhydriden in Waschmitteln und Waschmittel, die diese Copolymerisate enthalten

Aus Makromolekulare Chemie 180 (4), 1125 bis 1131 (1979) sind Copolymerisate aus 1,2-Dimethoxyethylen und Maleinsäureanhydrid bekannt. Die Copolymerisate werden beispielsweise zur Herstellung von pharmazeutischen Präparaten verwendet, die bei der Anwendung das wirksame Agens nach und nach abgeben. Aus der EP-PS 00 25 551 ist die Verwendung von Copolymerisaten aus 40 bis 90 Gew.% Acrylsäure oder Methacrylsäure und 60 bis 10 % Maleinsäure bzw. deren Alkali- oder Ammoniumsalzen als Inkrustierungsinhibitoren in Waschmitteln bekannt. Die Copolymerisate sind in Mengen von 0,5 bis 10 Gew.% in den Waschmittelformulierungen anwesend. Solche Produkte sind sehr wirksame Inkristierungsinhibitoren, jedoch sind damit keine stabilen Flüssigwaschmittelformulierungen herstellbar, weil es bereits nach relativ kurzer Zeit zu einer Phasentrennung kommt.

Der vorliegenden Erfindung liegt die Aufgabe zugrunde, Inkrustrationsinhibitoren für flüssige und pulverförmige Waschmittelformulierungen zur Verfügung zu stellen, die gut wirksam sind und die Herstellung stabiler Flüssigwaschmittelformulierungen gestatten.

Die Aufgabe wird erfindungsgemäß gelöst durch Verwendung von Copolymerisaten, die erhältlich sind durch Copolymerisation von

(a) 10 bis 55 Mol% 1,2-Di-$C_1$- bis $C_4$-alkoxyethylenen,

(b) 10 bis 60 Mol% monoethylenisch ungesättigten Dicarbonsäureanhydriden mit 4 bis 8 C-Atomen,

(c) 0 bis 60 Mol% monoethylenisch ungesättigten $C_3$- bis $C_8$-Monocarbonsäuren und

(d) 0 bis 20 Mol% anderen monoethylenisch ungesättigten Monomeren in inerten organischen Lösemitteln in Gegenwart von Polymerisationsinitiatoren und anschließende Hydrolyse der Anhydridgruppen der einpolymerisierten Monomeren (b) oder Umsetzung dieser Gruppen mit Alkoholen oder Aminen

als Zusatz zu pulverförmigen und flüssigen Waschmitteln in Mengen von 0,1 bis 15 Gew.%. Bevorzugt ist die Verwendung von solchen Copolymerisaten, die durch Copolymerisieren von

(a) 1,2-Dimethoxyethylen mit

(b) monoethylenisch ungesättigten Dicarbonsäureanhydriden mit 4 bis 8 C-Atomen im Molverhältnis 1 : 1 und anschließende Hydrolyse der Anhydridgruppen der einpolymerisierten Monomeren (b) erhältlich sind.

Geeignete Monomere der Komponente (a) zur Herstellung der Copolymerisate sind 1,2-Di-$C_1$- bis $C_4$-Alkoxyethylene wie 1,2-Dimethoxyethylen, 1,2-Diethoxyethylen, 1,2-D-in-propoxyethylen, 1,2-isopropoxyethylen und 1,2-n-Butoxyethylen. Vorzugsweise wird als Komponente (a) 1,2-Dimethoxyethylen eingesetzt. Die 1,2-Dialkoxyethylene können entweder in Form der reinen cis- oder trans-Isomere oder auch als cis,trans-Isomerengemische eingesetzt werden. Die Monomeren der Komponente (a) sind zu 10 bis 55, vorzugsweise 20 bis 50 Mol% am Aufbau der Copolymerisate beteiligt.

Als Komponente (b) zur Herstellung der Copolymerisate eignen sich monoethylenisch ungesättigte Dicarbonsäureanhydride mit 4 bis 8 C-Atomen, z.B. Maleinsäureanhydrid, Itaconsäureanhydrid, Mesaconsäureanhydrid, Zitraconsäureanhydrid und Methylenmalonsäureanhydrid. Von den genannten Anhydriden werden Maleinsäureanhydrid und Itaconsäureanhydrid bevorzugt eingesetzt, wobei Maleinsäureanhydrid in der Praxis von besonderer Bedeutung ist. Sofern die Monomeren der Komponenten (a) und (b) in Abwesenheit von anderen Monomeren der Copolymerisation unterworfen werden, entstehen alternierende Copolymerisate, die die genannten Monomeren im Molverhältnis 1 : 1 einpolymerisiert enthalten.

Die Eigenschaften der Copolymerisate können jedoch auch noch dahingehend modifiziert werden, daß man die Copolymerisation in Gegenwart von Monomeren der Gruppe (c) durchführt. Zu den Monomeren der Gruppe (c) gehören monoethylenisch ungesättigte $C_3$- bis $C_8$-Monocarbonsäuren, z.B. Acrylsäure, Methacrylsäure, Vinylessigsäure, Allylessigsäure, Propylidenessigsäure, Ethylidenessigsäure, Crotonsäure, $\alpha,\beta$-Ethylacrylsäure und $\alpha,\beta$-Dimethylacrylsäure. Vorzugsweise verwendet man aus dieser Gruppe von Monomeren Acrylsäure und Methacrylsäure. Die Monomeren der Gruppe (c) können bis zu 60 Mol% am Aufbau der Copolymerisate beteiligt sein. Sofern man die Monomeren der Gruppe (c) bei der Copolymerisation mitverwendet, ist die Herstellung von Terpolymerisaten bevorzugt, die als charakteristische Monomere

(a) 20 bis 50 Mol% 1,2-Di-$C_1$- bis $C_4$-Alkoxyethylene,

(b) 20 bis 55 Mol% monoethylenisch ungesättigte Dicarbonsäureanhydride mit 4 bis 8 C-Atomen und

(c) 0,5 bis 60 Mol% monoethylenisch ungesättigte $C_3$- bis $C_8$-Monocarbonsäuren einpolymerisiert enthalten und K-Werte von 10 bis 80 haben (bestimmt nach H. Fikentscher in Dimethylformamid bei einer Polymerkonzentration von 1 Gew.%).

Eine weitere Modifizierung der Copolymerisate kann dadurch erreicht werden, daß man die Copolymerisation in Gegenwart von Monomeren der Gruppe (d) vornimmt. Hierzu gehören andere monoethylenisch ungesättigte Monomeren, die von den Monomeren der Gruppen (a), (b) und (c) verschieden sind. Beispielsweise eignen sich hierfür Acrylamid, Methacrylamid, Dimethylaminoethylacrylat, Dimethylaminoethylmethacrylat, Diethylaminoethylacrylat, Diethylaminoethylmethacrylat, Acrylnitril, Methacrylnitril, Acrolein, Methacrolein, Vinylester von C1- bis $C_{20}$-gesättigten Alkoholen, insbesondere Vinylacetat und Vinylpropionat, Alkylvinylether mit $C_1$- bis $C_4$-Alkylgruppen, z.B. Methylvinylether, Ethylvinylether, n-Propylvinylether und Isobutylvinylether, Methacrylsäure- und Acrylsäurealkylester von $C_1$- bis $C_8$-Alkoholen, z.B. Acrylsäuremethylester, Acrylsäureethylester, Acrylsäure-n-propylester, Acrylsäureisopropylester, 2-Ethylhexylacrylat, 2-Ethylhexyl-methacrylat, Methacrylsäuremethylester, Methacrylsäureethylester, Methacrylsäuren-propylester, Methacrylsäureisopropylester und Methacrylsäureisobutylester, N-Vinylpyrrolidon, N-Vinylamide, wie N-Vinylformamid, N-Vinylacetamid, N-Vinylimidazol, N-Vinylimidazolin, N-Vinyl-2-Methylimidazolin. Die basischen Monomeren können in Form der freien Basen sowie in neutralisierter oder quaternisierter Form bei der Copolymerisation eingesetzt werden. Die Monomeren der Gruppe (d) sind von 0 bis 20 Mol% am Aufbau der Copolmyerisate beteiligt.

Die Copolymerisation erfolgt in inerten organischen Lösemitteln, die praktisch nicht in die Polymerisation eingreifen und die nicht mit den Monomeren reagieren. Solche Lösemittel sind beispielsweise $C_3$- bis $C_{10}$-Ketone, wie Aceton, Diethylketon, Methylethylketon und Cyclohexanon, Ether, wie Tetrahydrofuran und Dioxan, Ester aus gesättigten $C_2$- bis $C_4$-Carbonsäuren und gesättigten einwertigen $C_1$- bis $C_4$-Alkoholen, wie Methylacetat, Ethylacetat, Isopropylacetat, Propionsäuremethylester, Propionsäureethylester, Propionsäureisobutylester, Buttersäuremethylester, Buttersäureethylester und Buttersäureisobutylester, aromatische Kohlenwasserstoffe, wie Benzol, Toluol, Xylol und Cumol, aliphatische Kohlenwasserstoffen, wie Pentan, Hexan, Heptan, Octan, Isooctan, Cyclohexan, Methylcyclohexan, Dimethylcyclohexan, Ethylcyclohexan und Diethylcyclohexan, halogenierte aliphatische Kohlenwasserstoffe, wie Methylenchlorid, Dichlorethan, Trichlorethan und Tetrachlorethan sowie Kohlendioxid. Sofern die Polymerisation in Kohlendioxid durchgeführt wird, erfolgt sie bei Temperaturen von oberhalb 31 °C in überkritischem Kohlendioxid. Vorzugs weise verwendet man als Lösemittel Aceton, Methylethylketon, Tetrahydrofuran, Dioxan, Toluol oder Xylol. Die Polymerisation kann selbstverständlich auch in Mischungen inerter Lösemittel vorgenommen werden, die mit den Anhydridgruppen der Monomeren bzw. Polymeren nicht reagieren.

Die Copolymerisation erfolgt in Gegenwart von Verbindungen, die unter den Polymerisationsbedingungen in Radikale zerfallen. Geeignete Polymerisationsinitiatoren sind beispielsweise Wasserstoffperoxid, organische Peroxide und Hydroperoxide, Peroxidisulfate und Redoxinitiatoren. Die Polymerisation kann auch durch Einwirkung energiereicher Strahlung oder durch Bestrahlung des Reaktionsgemisches in Gegenwart eines Photoinitiators, wie beispielsweise Benzoin, vorgenommen werden.

Die Initiatoren sollen vorzugsweise bei den gewählten Polymerisationstemperaturen eine Halbwertszeit von <3 Std. besitzen. Wird beispielsweise bei niedriger Temperatur anpolymerisiert und bei höherer Temperatur auspolymerisiert, so empfiehlt es sich, mit mindestens 2 Initiatoren zu arbeiten. Beispielsweise sind für die genannten Polymerisationstemperaturen folgende Initiatoren geeignet:

Temp.: 50 bis 60 °C:
Acetylcyclohexansulfonylperoxid, Dicetylperoxydicarbonat, Dicyclohexylperoxidicarbonat, Di-2-ethylhexylperoxydicarbonat, tert.-Butylperneodecanoat, 2,2′-Azobis-(4-methoxi-2,4-dimethyl-valeronitril)
Temp.: 70 bis 80 °C:
tert.-Butylperpivalat, Dioctanoylperoxid, Dilauroylperoxid, 2,2′-Azobis(2,4-dimethylvaleronitril)
Temp.: 90 bis 100 °C:
tert.-Butyl-per-2-ethylhexanoat
Temp.; 110 bis 120 °C:
Bis-(tert.-butylperoxi)-cyclohexan, tert.-Butylperoxiisopropylcarbonat, tert.-Butylperacetat
Temp.: 130 bis 140 °C:
2,2-Bis-(tert.-butylperoxi)-butan, Dicumylperoxid, Di-tert.-amylperoxid, Di-tert.-butylperoxid
Temp.: 150 °C:
p-Menthanhydroperoxid, Pinanhydroperoxid, Cumolhydroperoxid, tert.-Butylhydroperoxid.

Durch die Mitverwendung von Redox-Coinitiatoren, wie beispielsweise Benzoin oder Dimethylanilin sowie von organisch löslichen Komplexen oder Salzen von Schwermetallen, wie Kupfer, Kobalt, Mangan, Eisen, Nickel, Chrom, können die Halbwertszeiten der genannten Peroxide, besonders der Hydroperoxide verringert werden, so daß beispielsweise tert.-Butylhydroperoxid in Gegenwart von 5 ppm Kupfer-II-Acetylacetonat bereits bei 100 °C wirksam ist.

Die in Radikale zerfallenden Polymerisationsinitiatoren werden in üblichen Mengen eingesetzt, z.B. 0,1 bis 5 Gew.%, bezogen auf die bei der Polymerisation verwendeten Mengen an Monomeren.

Die Copolmyerisation kann ggf. in Gegenwart von üblichen Reglern durchgeführt werden, z.B. Thio- und

Mercaptoverbindungen, wie Mercaptoethanol, Mercaptopropanol, Mercaptobutanol, Mercaptoessigsäure, Mercaptopropionsäure, Thiomilchsäure, n-Butylmercaptan, tert.-Butylmercaptan, Octylmercaptan und Dodecylmercaptan. Weitere geeignete Regler sind Aldehyde, wie Acetaldehyd, Propionaldehyd und Butyraldehyd sowie Ameisensäure. Die Regler werden, sofern man sie bei der Polymerisation mitverwendet, in Mengen von 0,01 bis 2 eingesetzt.

Die Copolymerisation kann ggf. noch in Gegenwart von Vernetzern durchgeführt werden. Geeignete Vernetzer sind beispielsweise Ethylenglykoldivinylether, Ethylenglykoldiacrylat, Ethylenglykoldimethacrylat, 1,2-Propylenglykoldiacrylat, 1,2-Propylenglykoldimethacrylat, Butandiol-1,4-diacrylat, Butan-1,4-dimethacrylat, Hexandiol-1,6-dimethacrylat, Neopentylglykoldiacrylat, Neopentylglykoldimethacrylat sowie Acrylsäure- oder Methacrylsäureester von Alkoholen mit mehr als 2 Hydroxylgruppen, z.B. Trimethylolpropantriacrylat oder Trimethylolpropantrimethacrylat. Außerdem eignen sich Diacrylate und Dimethacrylate von Polyethylenglykolen oder Polypropylenglykolen mit Molekulargewichten, die vorzugsweise in dem Bereich von etwa 400 bis 2000 liegen. Auch die den vorstehenden Di- und Tri(meth)acrylaten entsprechenden Di-, Trimaleinate und (Meth)acrylatmaleinate könnnen als Vernetzer eingesetzt werden. Falls die Copolymerisation in Gegenwart von Vernetzern durchgeführt wird, so beträgt die Menge an Vernetzer 0,1 bis 2,5 Gew.% bezogen auf die bei der Copolymerisation insgesamt eingesetzten Monomeren.

Die Polymerisation wird vorzugsweise in Rührkesseln durchgeführt, die beispielsweise mit einem Anker-, Blatt- oder Impellerrührer ausgestattet sind. Die Copolymerisation kann beispielsweise als Lösungs-, Fällungs- oder Suspensionspolymerisation durchgeführt werden. Bei der Fällungs- und Suspensionspolymerisation kann es vorteilhaft sein, zusätzlich in Gegenwart von Schutzkolloiden zu polymerisieren. Geeignete Schutzkolloide sind beispielsweise Copolymerisate aus Maleinsäureanhydrid mit Vinylalkylethern, die 1 bis 20 Kohlenstoffatome in der Alkylgruppe enthalten, oder Copolymerisate aus Maleinsäureanhydrid und Olefinen mit 8 bis 20 Kohlenstoffatomen sowie deren Monoester mit $C_{10}$- bis $C_{20}$-Alkoholen oder Monoamide mit $C_{10}$- bis $C_{20}$-Aminen. Außerdem eignen sich Polyalkylvinylether, deren Alkylgruppe 1 bis 20 Kohlenstoffatome enthält, z.B. Polymethyl-, Polyethyl- und Polyisobutylvinylether. Falls bei der Copolymerisation ein Schutzkolloid eingesetzt wird, so betragen die wirksamen Mengen 0,05 bis 4 Gew.%, bezogen auf die zu polymerisierenden Monomeren.

Die Konzentration der Monomeren in den inerten organischen Lösemitteln beträgt 5 bis 70, vorzugsweise 15 bis 50 Gew.%. Als inertes organisches Lösemittel kann auch das jeweils bei der Copolymerisation eingesetzte Monomere der Gruppe (a) verwendet werden. Nach Beendigung der Copolymerisation erfolgt die Hydrolyse der Anhydridgruppen der einpolymerisierten Monomeren (b) oder die Umsetzung dieser Gruppen mit Alkoholen oder Aminen. Bei der Hydrolyse, d.h. der Einwirkung von Wasser auf das hergestellte Copolymerisat, entstehen aus dem Anhydrid Carbonsäuregruppen bzw. die Salze von Carbonsäuregruppen, sofern bei der Hydrolyse wäßrige Basen verwendet wurden. Die Umsetzung der Anhydridgruppen der Copolymerisate kann in dem organischen Lösungsmittel erfolgen, in dem auch die Copolymerisation vorgenommen wurde oder man destilliert die verwendeten Lösemittel zunächst ab und führt dann die Hydrolyse der Anhydridgruppen oder deren Umsetzung mit Alkoholen oder Aminen durch. Die bei der Hydrolyse anfallenden wäßrigen Lösungen von Carboxylgruppen enthaltenden Copolymerisaten können direkt als Zusatz zu Waschmitteln verwendet werden. Falls die Copolymerisate in Form der freien Säuren nicht in ausreichendem Maße in Wasser löslich sein sollten, kann man sie in partiell oder vollständig neutralisierter Form einsetzen. Zur partiellen bzw. vollständigen Neutralisation der Copolymerisate verwendet man vorzugsweise Natronlauge, Kalilauge, Ammoniak oder Alkanolamine, z.B. Ethanolamin, Diethanolamin, Triethanolamin oder Mischungen der genannten Basen. Die Copolymerisate sind zumindest in neutralisierter Form wasserlöslich und haben K-Werte von 10 bis 100 (bestimmt bei pH 7 am Natriumsalz der Copolymerisate bei einer Polymerkonzentration von 2 Gew.%).

Die Anhydridgruppen enthaltenden Copolymerisate können jedoch auch durch Umsetzung mit Alkoholen partiell verestert werden, wobei aus einer Anhydridgruppe im Polymerisat bei der Umsetzung mit einem Alkohol jeweils eine Carboxyl- und eine Estergruppe entsteht. Geeignete Alkohole sind beispielsweise $C_1$- bis $C_{30}$-Alkohole oder besonders vorteilhaft solche OH-Gruppen enthaltenden Verbindungen, die durch Umsetzung von

(A) $C_1$- bis $C_{30}$-Alkoholen, $C_8$- bis $C_{22}$-Fettsäuren, $C_1$- bis $C_{12}$-Alkylphenolen, sekundären $C_2$- bis $C_{30}$-Aminen oder deren Mischungen mit

(B) mindestens einem $C_2$- bis $C_4$-Alkylenoxid im Molverhältnis (A) : (B) von 1 : 2 bis 50 herstellbar sind.

Geeignete Verbindungen (A) sind $C_1$- bis $C_{30}$-Alkohole, z.B. Methanol, Ethanol, n-Propanol, Isopropanol, n-Butanol, Isobutanol, tert.-Butanol, Pentanol, Cyclohexanol, n-Hexanol, n-Octanol, 2-Ethylhexanol, Decanol, Dodecanol und Stearylalkohol. Besondere technische Bedeutung haben die nach dem Oxoverfahren hergestellten Alkohole, z.B. $C_{10}$-Alkohole, $C_{13}$-Alkohole und $C_{13}/C_{15}$-Alkohole oder auch native Alkohole,

wie z.B. $C_{16}/C_{18}$-Talgfettalkohole. Bei diesen nach dem Oxoverfahren hergestellten Alkohole und den nativen Alkoholen handelt es sich in aller Regel um Mischungen mehrerer Alkohole.

Geeignete Verbindungen (A) sind außerdem $C_8$- bis $C_{22}$-Fettsäuren, z.B. Stearinsäure, Palmitinsäure, Cocosfettsäure, Talgfettsäure und Laurinsäure. Als Komponente (A) kommen außerdem $C_1$- bis $C_{12}$-Alkylphenole in Betracht, z.B. n-Decylphenol, n-Nonylphenol, Isononylphenol, n-Octylphenol, Isobutylphenol und Methylphenol. Als Komponente (A) werden ferner sekundäre $C_2$- bis $C_{30}$-Amine eingesetzt, z.B. Dimethylamin, Di-n-butylamin, Di-n-octylamin und Di-stearylamin. Vorzugsweise verwendet man sekundäre $C_8$- bis $C_{18}$-Fettamine. Bevorzugt als Komponente (A) werden $C_1$- bis $C_{30}$-Alkohole oder sek.-$C_2$- bis $C_{18}$-Amine eingesetzt.

Als Komponente (B) eignen sich $C_2$- bis $C_4$-Alkylenoxide, z.B. Ethylenoxid, Propylenoxid, n-Butylenoxid und Isobutylenoxid. Außerdem kommt Tetrahydrofuran als Komponente (B) in Betracht. Bevorzugt zum Einsatz gelangende Verbindungen (B) sind Ethylenoxid und Propylenoxid. Ethylenoxid und Propylenoxid können entweder allein an die unter (A) angegebenen Verbindungen angelagert werden oder in Form eines Mischgases unter Bildung von statistisch aufgebauten Ethylenoxid- und Propylenoxideinheiten enthaltenden Addukten oder auch in der Weise, daß man an die unter (A) genannten Verbindungen zunächst Ethylenoxid und danach Propylenoxid anlagert oder die Reihenfolge umkehrt oder auch zunächst Ethylenoxid, dann Propylenoxid und wiederum Ethylenoxid an die Verbindungen (A) anlagert, so daß Blockcopolymerisate entstehen. Verfahren zur Alkoxylierung der Verbindungen (A) gehören zum Stand der Technik.

Die Verbindungen (A) werden mit den Verbindungen (B) in einem Molverhältnis von (A) zu (B) von 1:2 bis 50, vorzugsweise 1:3 bis 12 umgesetzt. Bei dieser Reaktion entstehen in allen Fällen Umsetzungsprodukte, bei denen mindestens eine Endgruppe eine OH-Gruppe ist. Die so hergestellten Umsetzungsprodukte aus (A) und (B) werden mit den oben beschriebenen Copolymerisaten aus den Monomeren (a) bis (d) zur Reaktion gebracht, wobei partiell veresterte Copolymerisate entstehen. Diese Umsetzung kann in Gegenwart von gegenüber Carbonsäureanhydridgruppen inerten Lösemitteln, z.B. Aceton oder Tetrahydrofuran, durchgeführt werden und wird vorzugsweise in der Masse vorgenommen, d.h. die Dicarbonsäureanhydridgruppen enthaltenden Copolymerisate werden direkt mit den Umsetzungsprodukten von (A) und (B) zur Reaktion gebracht. Die Mengen werden dabei so gewählt, daß nur eine partielle Veresterung der Anhydridgruppen eintritt. Bezogen auf das hydrolysierte partiell veresterte Copolymerisat sind mehr als 5, z.B. 5,5 bis 50, vorzugsweise 9 bis 30 % der Carboxylgruppen verestert. Die Veresterung selbst wird in aller Regel bei höheren Temperaturen, z.B. 50 bis 200, vorzugsweise 80 bis 150 °C in Gegenwart üblicher Veresterungskatalysatoren vorgenommen. Besonders geeignet als Katalysator ist p-Toluolsulfonsäure. Die Veresterungsreaktion ist nach etwa 0,5 bis 20, vorzugsweise 1 bis 10 Stunden beendet. Die partielle Veresterung der Anhydridgruppen enthaltenden Copolymerisate mit den Umsetzungsprodukten aus (A) und (B) führt zu Produkten, die die Herstellung besonders lagerstabiler Flüssigwaschmittelformulierungen gestatten. Zu solchen Produkten gelangt man auch, wenn man die Umsetzung der Anhydridgruppen enthaltenden Copolymerisate mit langkettigen primären Aminen durchführt, z.B. $C_{10}$- bis $C_{22}$-Alkylaminen oder Aminen der Formel

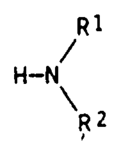 (I)

in der die Substituenten
$R^1$ = $C_8$- bis $C_{28}$-Alkyl,

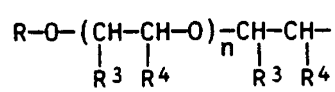 ,

R = $C_1$- bis $C_{28}$-Alkyl, H
$R^3$, $R^4$ = H, $CH_3$, $C_2H_5$,
n = 2 bis 100, und
$R^2$ = H oder $R^1$
bedeuten.

Die Anhydridgruppen der Copolymerisate werden bei dieser Umsetzung in die entsprechenden Halbamidgruppen umgewandelt.

Auch die mit Alkoholen bzw. Aminen umgesetzten Carboxylgruppen enthaltenden Copolymerisate können partiell oder vollständig mit den oben angegebenen Basen neutralisiert werden. Die Copolymerisate können entweder in Form der wäßrigen Lösung oder auch in Form eines Pulvers verwendet werden. Bei dem Einsatz der erfindungsgemäß zu verwendenden Produkte in Flüssigwaschmitteln geht man vorzugsweise von wäßrigen Lösungen der Copolymerisate aus. Solche Lösungen können selbstverständlich auch zur Herstellung von pulverförmigen Waschmitteln verwendet werden, indem man diese Lösungen trocknet oder auf pulverförmige Bestandteile der Waschmittelformulierung aufbringt und trocknet. Die Flüssigwaschmittel und die pulverförmigen Waschmittelformulierungen enthalten jeweils 0,1 bis 15, vorzugsweise 0,5 bis 10 Gew.% mindestens eines Copolymerisates der obenbeschriebenen Zusammensetzung. Die Waschmittelformulierungen enthalten als wesentliche Bestandteile

(1) mindestens ein anionisches Tensid, ein nichtionisches Tensid oder deren Mischungen und

(2) ein gemäß Erfindung einzusetzendes Copolymerisat.

Es können wasserhaltige und wasserfreie Flüssigwaschmittel verwendet werden, die klar oder auch trüb sein können. Bei Nichtlöslichkeit der erfindungsgemäßen Polymeren in der Flüssigwaschmittelformulierung können die Copolymeren auch fein verteilt werden und nach Bedarf mit Dispergiermittel stabilisiert werden. Geeignete anionische Tenside in Flüssigwaschmitteln sind beispielsweise Natriumalkylbenzolsulfonate, Fettalkoholsulfate und Fettalkoholpolyglykolethersulfate. Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich außerdem sulfatierte Fettsäurealkanolamine, Fettsäuremonoglyceride oder Umsetzungsprodukte von 1 bis 4 Mol Ethylenoxid mit primären oder sekundären Fettalkolen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Die flüssigen, wäßrigen Waschmittel enthalten 4 bis 50 Gew.% an Tensiden. Sie können dabei ein anionisches oder nichtionisches Tensid in der angegebenen Menge enthalten. Es ist jedoch auch möglich, Mischungen aus anionischen und nichtionischen Tensiden einzusetzen. In einem solchen Fall wählt man den Gehalt an anionischen Tensiden im Flüssigwaschmittel von 0 bis 50 Gew.% und den Gehalt an nichtionischen Tensiden im Flüssigwaschmittel von 0 bis 50 Gew.%, bezogen auf die gesamte Waschmittelformulierung.

Die Flüssigwaschmittel können Wasser in Mengen von 10 bis 60, vorzugsweise 20 bis 50 Gew.% enthalten. Sie können aber auch wasserfrei sein.

Die Flüssigwaschmittel können außerdem zur Modifizierung gegebenenfalls noch weitere Stoffe enthalten. Hierzu gehören beispielsweise Alkohole, wie Ethanol, n-Propanol und Isopropanol sowie niedermolekulare Polyalkylenglykole, wie Di-, Tri- und Tetraethylenglykol oder entsprechende Propylenglykole. Diese Stoffe werden, falls sie zur Anwendung gelangen, in Mengen von 3 bis 8 Gew.%, bezogen auf die gesamte Waschmittelformulierung, verwendet. Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Außerdem können die Flüssigwaschmittel gegebenenfalls Hydrotrope enthalten. Hierunter werden Verbindungen

verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyäthandiphosphonsäure, Ethylendiamintetraethylenphosphonsäure und deren Salze. Die Komplexbildner werden in Mengen von 0 bis 10 Gew.% bezogen auf die Waschmittel, eingesetzt. Die Waschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifzierung der Flüssigwaschmittel verwendet werden, zusammen in Mengen bis zu 5 Gew.% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels 10 bis 25 Gew.%. Pulverförmige Waschmittel können verschieden zusammengesetzt sein:

Universalhaushaltswaschmittel für Trommelwaschmaschinen, wie sie in Europa weit verbreitet sind, enthalten gewöhnlich 5 bis 10 Gew.-% Aniontenside; 1 bis 5 Gew.-% nichtionische Tenside; 1 bis 5 Gew.-% Schaumregulatoren, wie Silikonöle oder Seifen; 0 bis 40 Gew.-% Enthärtungsmittel, wie Soda oder Pentanatriumtriphosphat, das durch die erfindungsgemäßen Verbindungen teilweise oder ganz ersetzt werden kann; 0 bis 30 Gew.-% Ionenaustauscher, wie Zeolith A; 2 bis 7 Gew.-% Natriumsilikate als Korrosionsinhibitoren; 10 bis 30 Gew.-% Bleichmittel, wie Natriumperborat oder Natriumpercarbonat; 0 bis 5 Gew.-% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Farbstoffe und Stellmittel. Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.-%) und natürlich fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen. Fein- und Buntwaschmittel; Wollwaschmittel und Mittel für die manuelle Wäsche enthalten ebenfalls meist kein Bleichmittel und geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunktmäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen. Geeignete Anion- und nichtionische Tenside für Pulverwaschmittel sind die gleichen wie die unter Flüssigwaschmittel genannten.

Die Prozentangaben in den Beispielen sind Gew.%. Die K-Werte wurden nach H. Fikentscher, Cellulosechemie, Band 13, 58 bis 64 und 71 bis 74 (1932), bestimmt; dabei bedeutet $K = k \cdot 10^3$. Die K-Werte hydrolisierter Copolymerisate wurden in wäßriger Lösung bei 25 C, einem pH-Wert von 7,0 und einer Polymerkonzentration von 2 Gew.% der Natriumsalze der Copolymerisate gemessen.

Copolymerisat 1

In einem mit einem Rührer sowie drei Zulaufgefäßen versehenen Reaktor aus Glas werden 255 g Methylethylketon, 9,8 g Maleinsäureanhydrid und 9,0 g 1,2-Dimethoxyethylen vorgelegt und auf eine Temperatur von 80 °C unter einem Stickstoffstrom erwärmt. Sobald eine Innentemperatur von 80 °C erreicht ist, gibt man innerhalb von 2 Stunden eine Lösung von 88,2 g Maleinsäureanhydrid in 135 g Methylethylketon sowie 80,8 g Dimethoxyethylen zu. Gleichbeginnend damit wird innerhalb von 2,5 Stunden eine Lösung von 4,96 g tert.-Butylperpivalat (75 %ig in aliphatischen Kohlenwasserstoffen) in 50 g Methylethylketon dem Reaktionsansatz zugeführt. Anschließend läßt man 2 Stunden bei 80 °C nachreagieren und destilliert das Lösemittel bei 65 °C und einem Druck von 100 bis 500 mbar ab. 160,8 g des erhaltenen Copolymerisats werden in Wasser unter Zugabe von 50 %iger wäßriger Natronlauge gelöst und auf einem pH-Wert von 6,5 eingestellt. Das Copolymerisat-Salz wird durch Fällung mit Azeton und Trocknen im Vakuum bei 75 °C

gereinigt. Das Copolymerisat hat einen K-Wert von 47,7.

Copolymerisat 2

Man verfährt wie bei der Herstellung des Copolymerisats 1, fügt jedoch im Anschluß an die Nachpolymerisation Wasser zum Reaktionsgemisch und gibt soviel 50 %ige wäßrige Natronlauge zu, daß sich ein pH-Wert von 6,5 einstellt. Das als Lösemittel verwendete Methylethylketon wird dann bei 65 °C und 100 bis 500 mbar abdestilliert. Die so erhaltene wäßrige Lösung des Natriumsalzes des Copolymerisats aus 1,2-Dimethoxyethylen und Maleinsäureanhydrid hat einen Feststoffgehalt von 14,6 %. Das Copolymerisat hat einen K-Wert von 69,8. Der Restgehalt an nichtpolymerisierter Maleinsäure, bezogen auf das Copolymerisat, beträgt 0,04 %.

Beispiel 1

Copolymerisat 3

In einem 1 l fassenden Glasreaktor, der mit einem Rührer und vier Zulaufgefäßen ausgestattet ist, werden unter Stickstoff 179 g Methylethylketon, 7,8 g Maleinsäureanhydrid, 3,6 g 1,2-Dimethoxyethylen und 2,9 g Acrylsäure vorgelegt und unter Rühren auf eine Temperatur von 80 °C erwärmt. Nachdem die Temperatur von 80 °C erreicht ist, gibt man innerhalb von 2 Stunden bei dieser Temperatur eine Lösung von 70,6 g Maleinsäureanhydrid in 108 g Methylethylketon, 32,3 g 1,2-Dimethoxyethylen sowie 25,9 g Acrylsäure zu. Gleichbeginnend mit der Monomerzugabe wird innerhalb von 2,5 Stunden eine Lösung von 3,8 g tert.-Butylperpivalat (75 %ig in aliphatischen Kohlenwasserstoffen), in 50 g Methylethylketon zudosiert. Nach Beendigung der Initiatorzugabe wird das Reaktionsgemisch noch 2 Stunden bei 80 °C gerührt und danach das Lösemittel bei 65 °C unter einem Druck von 100 bis 500 mbar abdestilliert. Das Produkt wird dann in Wasser unter Zugabe von 50 %iger wäßriger Natronlauge gelöst und die wäßrige Lösung auf einen pH-Wert von 6,5 eingestellt. Durch Zugabe einer Mischung aus gleichen Gewichtsteilen Methanol und Aceton wird das Polynatriumsalz des Copolymerisates aus 1,2-Dimethoxyethylen, Maleinsäure und Acrylsäure aus der wäßrigen Lösung ausgefällt. Es wird abfiltriert und im Vakuum bei 65 °C getrocknet. Das Copolymerisat hat einen K-Wert von 36,2.

Beispiel 2

Copolymerisat 4

In einem 500 ml fassenden Glasreaktor, der mit einem Rührer und vier Zulaufgefäßen versehen ist, werden unter einer Stickstoffatmosphäre 142 g Methylethylketon, 2 g Maleinsäureanhydrid, 1,8 g Dimethoxyethylen und 4,3 g Acrylsäure vorgelegt und auf 80 °C erwärmt. Sobald das Reaktionsgemisch eine Temperatur von 80 °C erreicht hat, fügt man dazu innerhalb von 2 Stunden eine Lösung von 17,6 g Maleinsäureanhydrid in 30 g Methylethylketon, 15,8 g 1,2-Dimethoxyethylen und 38,98 g Acrylsäure. Gleichbeginnend mit den Monomerenzuläufen wird innerhalb von 2,5 Stunden eine Lösung von 1,1 g tert.-Butylperpivalat (75 %ig in aliphatischen Kohlenwasserstoffen) in 20 g Methylethylketon zugegeben. Nach Beendigung der Initiatorzugabe rührt man die Mischung noch 2 Stunden bei 80 °C, bei der auch die Polymerisation durchgeführt wurde. Die Lösung wird dann mit Wasser verdünnt und durch Zugabe von 50 %iger wäßriger Natronlauge auf einen pH-Wert von 6,5 eingestellt. Methylethylketon wird anschließend bei 65 °C im Vakuum abdestilliert unter einem Druck von 100 bis 500 mbar, so daß man eine wäßrige Lösung des Natriumsalzes eines Copolymerisates aus 1,2-Dimethoxyethylen, Maleinsäure und Acrylsäure mit einem Feststoffgehalt von 19,3 % erhält. Der K-Wert des Copolymerisats beträgt 50,7. Der Gehalt an restlicher Maleinsäure im Copolymerisat war 0,16 %.

Beispiel 3

Copolymerisat 5

Man verfährt wie bei der Herstellung des Copolymerisats 4 beschrieben, legt jedoch 2,9 g Maleinsäureanhydrid, 2,6 g 1,2-Dimethoxyethylen, 2,9 g Acrylsäure und 139 g Methylethylketon vor und dosiert bei 80 °C eine Lösung von 26,5 g Maleinsäureanhydrid in 40,5 g Methylethylketon, 23,8 g 1,2-Dimethoxyethylen, 25,9 g Acrylsäure sowie eine Lösung von 1,1 g tert.-Butylperpivalat (75 %ig in aliphatischen Kohlenwasserstoffen) in 20 g Methylethylketon. Man erhält eine wäßrige Lösung eines Polynatriumsalzes eines Copolymerisats mit einem Feststoffgehalt von 21 %. Der K-Wert des Copolymerisats beträgt 56,8. Das Copolymerisat enthält 0,35 Maleinsäure.

Beispiel 4

Copolmyerisat 6

Wie bei der Herstellung des Copolymerisats 4 beschrieben, jedoch in Abweichung davon legt man 3,9 g Maleinsäureanhydrid, 3,5 g 1,2-Dimethoxyethylen, 1,4 g Acrylsäure und 133 g Methylethylketon vor und dosiert dann eine Lösung von 35,3 g Maleinsäureanhydrid in 57 g Methylethylketon, 31,7 g 1,2-Dimethoxyethylen, 13 g Acrylsäure und 1,1 g tert.-Butylperpivalat (75 %ig in aliphatischen Kohlenwasserstoffen) in 20 g Methylethylketon. Nach der Aufarbeitung erhält man eine Lösung des Polynatriumsalzes eines Copolymerisates aus 1,2-Dimethoxyethylen, Maleinsäure und Acrylsäure mit einem Feststoffgehalt von 20 %. Der K-Wert des Copolymerisats beträgt 51,7. Der Gehalt des Copolymerisates an restlicher Maleinsäure wurde zu 0,19 % bestimmt.

Copolymerisat 7

Natriumsalz eines Copolymerisates aus 70 Acrylsäure und 30 Maleinsäure vom K-Wert 60 (Inkrustationsinhibitor gemäß EP-PS 0 025 551).

Anwendungstechnische Beispiele

Um die inkrustrierungsinhibierende Wirkung der oben beschriebenen Copolymerisate zu testen, wurden die oben beschriebenen Copolymerisate jeweils in zwei unterschiedliche pulverförmige Waschmittel A und B eingearbeitet. Mit diesen Waschmittelformulierungen wurden jeweils Testgewebe aus Baumwolle und Baumwollfrotteetestgewebe gewaschen. Die Zahl der Waschzyklen betrug 20. Nach dieser Anzahl von Wäschen wurde der Aschegehalt des Gewebes ermittelt, indem man das Testgewebe jeweils veraschte. Der Aschegehalt wird in Gew.% angegeben. Je wirksamer das im Waschmittel enthaltene Copolymerisat ist, desto geringer ist der Aschegehalt des Testgewebes.

Versuchsbedingungen für die Ermittlung der Inkrustierung:

Gerät: Launder-O-Meter der Fa. Atlas, Chicago
Zahl der Waschzyklen: 20
Waschflotte: 250 ml, wobei das verwendete Wasser 4 mMol Härte pro Liter aufweist (Calcium zu Magnesium gleich 4 : 1)
Waschdauer: 30 Min. bei 60 °C (einschließlich Aufheizzeit)
Waschmitteldosierung: 8 g/l

Waschmittel A

12,5 % Dodecylbenzolsulfonat (50%)
4,7 % C 13/C 15-Oxoalkoholpolyglycolether (7 E0)
2,8 % Seife
25 % Zeolith A

4 % Na-Disilikat
1 % Mg-Silikat
20 % Natriumperborat
14 % Natriumsulfat
10 % Copolmyerisat
Rest auf 100 % Natriumsulfat

Waschmittel B

12,5 % Dodecylbenzolsulfonat (50 %)
4,7 % C 13/C 15-Oxoalkoholpolyglycolether (7 EO)
2,8 % Seife
10 % Pentanatriumtriphosphat
24 % Zeolith A
6 % Na-Disilikat
1 % Mg-Silikat
20 % Natriumperborat
15 % Natriumsulfat
3 % Copolymerisat
Rest auf 100 % Natriumsulfat

Tabelle 1

| Bsp. | Vergleichsbeispiel | Waschmittel | Copolymer Nr. | Gew.% Asche des Testgewebes | |
|---|---|---|---|---|---|
| | | | | Baumwolle | Frottee |
| | 1 | 1 | - | 1.01 | 4.63 |
| | 2 | 1 | 7 | 0.65 | 2.77 |
| 5 | | 1 | 1 | 0.64 | 2.47 |
| 6 | | 1 | 3 | 0.52 | 2.64 |
| | 3 | 2 | - | 1.61 | 4.60 |
| | 4 | 2 | 7 | 0.55 | 0.53 |
| 7 | | 2 | 2 | 0.48 | 0.38 |
| 8 | | 2 | 4 | 0.48 | 0.53 |
| 9 | | 2 | 5 | 0.37 | 0.42 |
| 10 | | 2 | 6 | 0.51 | 0.47 |

**Ansprüche**

1. Verwendung von Copolymerisaten, die erhältlich sind durch Copolymerisation von
(b) 10 bis 55 Mol% 1,2-Di-$C_1$- bis $C_4$-alkoxyethylenen,
(b) 10 bis 60 Mol% monoethylenisch ungesättigten Dicarbonsäureanhydriden mit 4 bis 8 C-Atomen,
(c) O bis 60 Mol% monoethylenisch ungesättigten $C_3$- bis $C_8$-Monocarbonsäuren und
(d) 0 bis 20 Mol% anderen monoethylenisch ungesättigten Monomeren
in inerten organischen Lösemitteln in Gegenwart von Polymerisationsinitiatoren und anschließende Hydrolyse der Anhydridgruppen der einpolymerisierten Monomeren (b) oder Umsetzung dieser Gruppen mit Alkoholen oder Aminen
als Zusatz zu pulverförmigen und flüssigen Waschmitteln in Mengen von 0,1 bis 15 Gew.%.

2. Verwendung nach Anspruch 1, dadurch gekennzeichnet, daß man Copolymerisate einsetzt, die durch Copolymerisation von
(a) 1,2-Dimethoxyethylen mit
(b) monoethylenlsch ungesättigten Dicarbonsäureanhydriden mit 4 bis 8 C-Atomen
im Molverhältnls 1 : 1 und anschließende Hydrolyse der Anhydridgruppen der einpolymerisierten Monomeren (b) erhältlich sind.

3. Verwendung nach Anspruch 1, dadurch gekennzeichnet, daß man Copolymerisate einsetzt, die durch Copolymerisieren von
(a) 20 bis 50 Mol% 1,2-Di-$C_1$- bis $C_4$-alkoxyethylenen,
(b) 20 bis 55 Mol% monoethylenisch ungesättigten Dicarbonsäureanhydriden mit 4 bis 8 C-Atomen und
(c) 0,5 bis 60 Mol% monoethylenisch ungesättigten $C_3$- bis $C_8$-Monocarbonsäuren
erhältlich sind.

4. Terpolymerisate, die als charakteristische Monomere
(a) 20 bis 50 Mol% 1,2-Di-$C_1$- bis $C_4$-alkoxyethylene,
(b) 20 bis 55 Mol% monoethylenisch ungesättigte Dicarbonsäureanhydride mit 4 bis 8° C-Atomen und %
(c) 0,5 bis 60 Mol- monoethylenisch ungesättigten $C_3$- bis $C_8$-Monocarbonsäuren
einpolymerisiert enthalten und K-Werte von 10 bis 80 haben (bestimmt nach H. Fikentscher in Dimethylformamid bei einer Polymerkonzentration von 1 Gew%).

5. Flüssige und pulverförmige Waschmittelformulierungen, die als wesentliche Bestandteile
(1) mindestens ein anionisches Tensid, ein nichtionisches Tensid oder deren Mischungen und
(2) Polymerisate
enthalten, dadurch gekennzeichnet, daß sie als Bestandteil (2) Copolymerisate in Mengen von 0,1 bis 15 Gew.% enthalten, und daß diese Copolymerisate herstellbar sind durch Copolymerisation von
(a) 10 bis 55 Mol% 1,2-Di-$C_1$- bis $C_4$-alkoxyethylenen,
(b) 10 bis 60 Mol% monoethylenisch ungesättigten Dicarbonsäureanhydriden mit 4 bis 8 C-Atomen,
(c) 0 bis 60 Mol% monoethylenisch ungesättigten $C_3$- bis $C_8$-Monocarbonsäuren und
(d) 0 bis 20 Mol% anderen monoethylenisch ungesättigten Monomeren
in inerten organischen Lösemitteln in Gegenwart von Polymerisationsinitiatoren und anschließende Hydrolyse der Anhydridgruppen der einpolymerisierten Monomeren (b) oder Umsetzung dieser Gruppen mit Alkoholen oder Aminen.